# EUROPEAN PATENT APPLICATION

(11) **EP 1 501 219 A1**
(43) Date of publication of application: **26.01.2005**
(21) Application number: 04254283.7
(22) Date of filing: 16.07.2004
(51) Int. Cl.: H04B 7/26

(54) **Pseudorandom number offset assignment system and method**

(30) Priority: 25.07.2003 US 627798
(71) Applicant: LUCENT TECHNOLOGIES INC., Murray Hill, New Jersey 07974-0636 (US)
(72) Inventor: Pan, Victor Hrid, Bedminster, 07921 New Jersey (US)
(74) Representative: Watts, Christopher Malcolm Kelway, Dr.

(57) **Abstract**

PN offsets of a synchronized timing system are assigned to sectors of communications cells of a network. A minimum delay offset avoids signal collision between adjacent sectors. Delay offsets assigned to sectors of different cells are variable delay offsets.

## Description

### FIELD OF THE INVENTION

This present invention relates to the assignment of pseudorandom numbers (PNs), and in particular, to the assignment of PN sequence offsets in a Code Division Multiple Access (CDMA) system.

### BACKGROUND OF THE INVENTION

Cellular digital communications systems using Code Division Multiple Access (CDMA) in accordance with the IS-95 standard are currently being deployed for use in the 900 MHz cellular band and 2 GHz PCS band. As the popularity of this type of cellular communication increases, and the number of users and the traffic load increases, there is a need to expand the ability of an existing CDMA cell to carry even more traffic.

In a CDMA system, multiple access is based on spread spectrum technology. A unique binary spreading sequence, a code, is assigned for each call to each user. Multiplied by one assigned code, the user signal is "spread" onto a bandwidth much wider than the original signal. The ratio of the two signals is commonly called the spreading factor. All active users share the same frequency spectrum at the same time. The signal of each user is separated from the others at the receiver by using a correlator keyed with the associated code signal to "despread" the desired signal. Since multiple users share the same frequency spectrum, other users' signals contribute interference. By reducing interference, CDMA system capacity can be increased.

Since in a CDMA system all mobile units (e.g., cellular phones) communicate with their serving base station on the same frequency, a mobile unit must be able to differentiate one base station from another. In order to identify each base station separately, each base station transmits an identical repeating pseudorandom number (PN) sequence of codes that are offset in time from the PN sequences of other base stations. This offset or time delay is known as the PN offset assignment. Due to different radio frequency propagation delays, sometimes a mobile will "see" two identical PN sequences from two base stations thus causing a 'collision' of signals. When this happens, the mobile cannot distinguish between these two base station sequences and interference results. If the interference is severe enough, degraded service or a service outage can result.

A CDMA system parameter known as PILOT INC is used to assist in providing time or phase delay within identical PN sequences such that 'collisions' do not occur. PILOT INC is a parameter that indicates a fixed minimum time offset spacing between PN codes. For example, a PILOT INC of 5 in an IS-95 CDMA system corresponds to a time separation of five (5) PN codes between usable PN offsets. Since the IS-95 standard specifies 512 PN codes in a repeating sequence, if PILOT INC is 5, the assignable PN code offsets are 0, 5, 10, 15, etc.
Thus, PN offsets 1-4, 6-9, 11-14, etc. would be unused or wasted. However, PILOT INC is not a viable solution to the 'collision' problem in that it reduces the number of available assignable PN offsets (e.g., if PILOT INC=5, there are approximately 102 usable PN offsets and 410 unusable PN offsets).

Thus, there is presently a need for a method and apparatus for assigning PN offsets that permits a large number of PN offset assignments but still maintains a collision free system.

### SUMMARY OF THE INVENTION

PN offsets of a synchronized timing system are assigned to sectors of communications cells of a network. A minimum delay offset is determined, that will avoid signal collision between adjacent sectors. Delay offsets assigned to sectors of different cells are variable delay offsets.

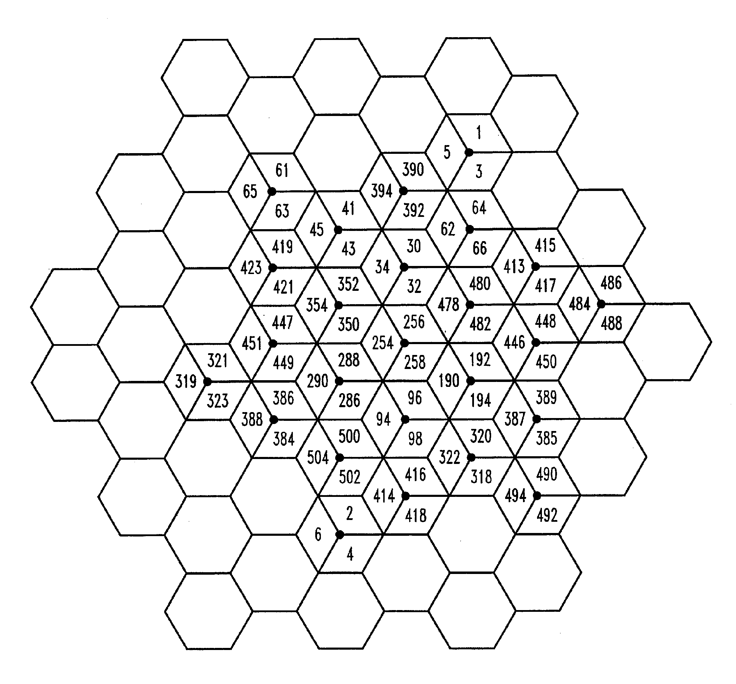

### BRIEF DESCRIPTION OF THE DRAWING

The Figure is a graphical representation of a cellular network according to an exemplary embodiment of the present invention.

### DETAILED DESCRIPTION

All time synchronized CDMA base station sectors (cells) transmit the same repeating pseudorandom number (PN) sequence of codes. In IS-95 for example, the repeating PN sequence is comprised of five hundred twelve (512) "64-chip" PN codes. In IS-95 CDMA, a "chip" refers to a unit of time approximately 0.8 microseconds (µs) long. A "chip" is the finest resolution of time in IS-95 CDMA. Sixty four (64) "chips" is the approximate time it takes to transmit one PN code (i.e., approximately 51.2 µs). Since there are 512 such PN codes in IS-95, it takes approximately 26.2 milliseconds (ms) to transmit the entire PN sequence. This sequence is continuously retransmitted by each sector in the network but with different PN (time) offsets.

Each sector (cell) is assigned a time offset that is intended to uniquely identify the serving sector's pilot signal by changing the phase (timing) of its repeating PN sequence. Global Positioning System satellites provide time synchronization for the PN sequences transmitted by all sectors (cells) in the network. The time offsets are "correct" when the PN sequences received by a mobile unit (e.g., cellular telephone) from multiple sectors (cells) are orthogonal (i.e., out of phase with respect to each other). The orthogonality of the PN codes ensures the mobile unit is able to extract the serving sector's (cell's) signals from signals received from all other sectors (cells). This provides the basis for the ability to use the same frequency in every sector throughout a CDMA network.

Time offsets are "incorrect" when PN sequence orthogonality is lost. This often occurs because of different RF signal propagation delays inherent in the transmission of radio frequencies between multiple sectors to a mobile. For instance, as a radio frequency signal propagates from a base station to a mobile unit, the signal incurs a time delay. This time delay 'shifts' (in time) the time offsets or phase of the PN sequences received by mobile units from sectors (cells) surrounding the primary sector/cell (e.g., the cell in which the mobile unit is presently disposed). Because a mobile unit is generally positioned at different distances from surrounding sectors (cells), the received PN sequences are time shifted by different amounts. Orthogonality can be lost when the PN sequences from two or more sectors appear to the mobile to have the same delay or phase and are therefore indistinguishable and thus 'collide.'

The simplest example of a 'collision' occurs when a sector's (cell's) time offset assignment is only one (1) PN offset (e.g., approximately 64 "chips", or 52µs) ahead of the serving sector, and the sector's (cell's) PN sequence is delayed by 1 PN offset (e.g., 52µs) due to propagation delay to the mobile. In such a circumstance, the mobile unit cannot distinguish between the serving sector's (cell's) PN sequence and the PN sequence of the sector (cell) causing a 'collision.' Occurrence of a 'collision' renders both sectors unusable for some period of time.

Loss of orthogonality can also arise when a sector's PN sequence is time-offset such that only a part of the received PN codes overlap with the serving sector's PN codes. Here, the PN offset sequences are less than 64 chips apart. The mobile's rake receiver "fingers" combine signals from both sectors causing them to interfere with each other. The further away a sector is from the serving sector, the greater time shift in its PN sequence increasing the potential for collisions. If the sector is far enough away, RF interference is weak enough not to matter. As there are never enough unique time-offsets to go around, offset assignments have to be spatially reused on sectors that are far enough away with the intent to make collisions that occur harmless. It is only when there are not enough PN offset assignments that collisions are not harmless and service quality problems arise.

PILOT INC is a system parameter that creates delay within PN sequences by not using all PN offsets. In IS-95 for example, there are 512 PN codes in the PN sequence. PILOT INC is an integer so that only 512/ PILOT INC unique time offsets are assigned to sectors (cells) before they have to be reused (reassigned). For example, for a PILOT INC of 8, the assignable time-offsets are 0, 8, 16, ...512, and the time offsets between offset assignments are unused (e.g. not assignable). Larger values of PILOT INC add greater delay between PN offset assignments because more of the PN offsets are unused. The conventional engineering practice is to use larger PILOT INCs to avoid collisions.

The general PN offset assignment problem is to find time-offset assignments for every base station sector in the network such that where RF interference must be avoided, PN offset assignments are chosen far enough apart to avoid collisions. In sectors where RF interference is weak enough not to matter, PN offset assignments are spatially reused. In buildings supported by dedicated cells, the remaining assignable PN offsets are available to support buildings. The value of PILOT INC used constrains the number of PN offsets that are assignable.

As traffic increases, more macrocells are deployed, and as RF coverage is expanded into more buildings lit up by dedicated cells, the need for more PN offset assignments increases. In response to this growing need for more PN offset assignments, infrastructure manufacturers have recently started modifying MSC (Mobile Switching Center) software to support multiple PILOT INCs within the network. Clusters of base stations or sectors typically in urban areas operate with smaller PILOT INCs freeing up more offsets to assign in smaller radii cells. Simultaneously, in other parts of the network where there are larger cell radii, larger PILOT INCs are used to avoid collisions. The present invention is a PN offset assignment methodology that provides PN offset assignments unconstrained by PILOT INC with no MSC software changes required. Moreover, the present invention allows PN offset assignments within a sector to be independently optimized for buildings as well as the outside morphology characteristics of the sector. This later claim cannot be supported by MSC software as the sector is the finest geographic resolution for PILOT INC.

The present invention makes assignable all the PN offsets allowed by the standard by setting PILOT INC to 1. For IS-95, all 512 offsets within the standard are now assignable. Rather than using a large PILOT INC (e.g., N=7) to create fixed delay between PN offset assignments (e.g., 0, 8, 16, etc.), the present invention creates variable delay between PN offset assignments through the careful selection of PN offsets with respect to the location of sectors (cells) within the CDMA network. Collisions are avoided in nearby sectors by choosing PN offsets that are just offset or delayed enough in time to avoid collisions. For sectors further apart, PN offset assignments are chosen from the maximum pool of 512 in the case of IS-95, with greater delay offsets than in nearby sectors but with just enough delay. Finally, for those sectors far enough apart where collisions are rendered harmless, the already assigned PN offsets can be reassigned. Thus, it is possible to more efficiently utilize PN offsets by first expanding the assignable pool up to the maximum allowed by the standard (512 in IS-95) and use variable delay offsets to be able to assign more of them unconstrained by PILOT INC. The Figure shows one such embodiment. Since all MSCs support any fixed value of PILOT INC, no software changes are required.

The Figure shows a first exemplary IS-95 PN offset assignment solution using variable, instead of fixed (e.g. PILOT INC), offsets to avoid collisions with a spatial reuse of 25. Nearby sectors generally require less delay offsets to avoid collisions while further away sectors generally require greater delay offsets. In the exemplary embodiment shown in the Figure PILOT INC is set to 1, so the assignable PN offsets are unconstrained by PILOT INC. Adjacent sectors within a base station can use the smallest delays (2 or 3 offsets e.g. 254, 256, 258 or 251, 254, 257) to avoid collisions. The use of offsets separated by 2 or 3 offsets on base station sectors frees up a plethora of PN offset assignments that could not be available with the conventional PILOT INC approach. For example, a wide mix of odd and even PN offset assignments can be flexibly used almost anywhere in the network as needed. With so many more PN offsets assignable, adjacent base station sectors can avoid collisions with the embodiment shown. the Figure shows a spatial PN offset assignment reuse of 25 cells. To reassign the PN offsets to another cell, say, {254, 256, 258}, count up 5 cells and assign those offsets to that cell. Do this for each of the 25 cells in the reuse pattern of the Figure. It is the use of variable, rather than fixed offsets (PILOT INC) that provide the flexibility to more efficiently use all the PN offset assignments allowed by the standard.

Assume the outside PN offset assignments shown in the Figure. Buildings within a sector can now use nearly all of the unassigned PN offsets of another sector without collisions. For example, in the sector labeled 256 in the Figure, buildings within that sector can use the unused PN offsets near the assignments {62, 64, 66} associated with the cell on the upper right of the Figure. Building 1 can use 68, building 2 can use 444, building 3 with two sectors can use 2 and 5 without fear of collisions. Because the pool of assignable PN offsets is made so much larger, say with either PILOT INC = 1 or 2, it is unlikely that there will ever be a shortage of PN offsets to assign. And since all MSCs support a fixed value of PILOT INC, no software changes are required. Method steps of assigning offsets can be performed in any sequence.

In sum, by reducing PILOT INC, the present invention expands the pool of assignable PN offset assignments and permits the mixing of offset assignments that are close together with those that are farther apart. The present method may be implemented in an ad hoc manner, or through a rule-based assignment scheme. As CDMA finds its way into wider classes of services and more ubiquitous coverage, the present invention offers a simple method for retaining CDMA's ability to reuse the same frequency throughout the entire network.

The following Table shows the correspondence between the cells shown in the Figure and the offset assignments shown in the Figure:

| **CELL** | **OFFSETS** |
|---|---|
| 1 | 254, 256, 258 |
| 2 | 94, 96, 98 |
| 3 | 190, 192, 194 |
| 4 | 478, 480, 482 |
| 5 | 30, 32, 34 |
| 6 | 350, 352, 354 |
| 7 | 286, 288, 290 |
| 8 | 414, 416, 418 |
| 9 | 318, 320, 322 |
| 10 | 385, 387, 389 |
| 11 | 446, 448, 450 |
| 12 | 413, 415, 417 |
| 13 | 62, 64, 66 |
| 14 | 390, 392, 394 |
| 15 | 41, 43, 45 |
| 16 | 419, 421, 423 |
| 17 | 447, 449, 451 |
| 18 | 384, 386, 388 |
| 19 | 500, 502, 504 |
| 20 | 2, 4, 6 |
| 21 | 490, 492, 494 |
| 22 | 484, 486, 488 |
| 23 | 1, 3, 5 |
| 24 | 61, 63, 65 |
| 25 | 319, 321, 323 |

Although the invention has been described in terms of exemplary embodiments, it is not limited thereto. Rather, the appended claims should be construed broadly to include other variants and embodiments of the invention, which may be made by those skilled in the art without departing from the scope and range of equivalents of the invention.

## Claims

1. A method for assigning PN offsets of a synchronized timing system to sectors of communication cells in a communications network comprising the steps of:
determining a minimum delay offset between PN offsets that will avoid signal collision when the PN offsets are assigned to adjacent sectors of the same cell ;
applying delay offsets of no less than the minimum delay offset between PN offsets assigned to adjacent sectors of the same cell; and
applying varied delay offsets between PN offsets assigned to sectors of different cells.

2. The method of claim 1 and further comprising the steps of:
determining that the minimum delay offset is two (2); and
applying a delay offset of two (2) between PN offsets assigned to sectors of the same cell.

3. The method of claim 1 and further comprising the steps of:
determining that the minimum delay offset is two (2); and
applying a delay offset of at least three (3) between PN offsets assigned to adjacent sectors of the same cell.

4. The method of claim 1 and further comprising the steps of:
applying delay offsets of more than the minimum delay offset between the PN offsets assigned to sectors of the same cell.

5. The method of claim 4 and further comprising the steps of:
determining that the minimum delay offset is two (2); and
applying a delay offset of at least three (3) between PN offsets assigned to sectors of the same cell.

6. The method of claim 1 and further comprising the step of:
applying a varied delay offset of more than the minimum delay offset between PN offsets assigned to sectors of different cells when the different cells are within five cells of each other.

7. A network of communication cells having sectors assigned with PN offsets of a synchronized timing system, comprising:
the PN offsets that are assigned to adjacent sectors of the same cell having no less a minimum delay offset therebetween to avoid signal collision; and
the PN offsets that are assigned to sectors of different cells having varied delay offsets therebetween.

8. The network of claim 7 and further comprising:
the PN offsets that are assigned to adjacent sectors of the same cell being applied with the minimum delay offsets therebetween.

9. The network of claim 8 and further comprising:
the minimum delay offset is two.

10. The network of claim 7 and further comprising:
the PN offsets that are assigned to adjacent sectors of the same cell being applied with delay offsets therebetween of more than the minimum delay offset.
